# EUROPEAN PATENT SPECIFICATION

(11) **EP 3 128 850 B1**
(45) Date of publication and mention of the grant of the patent: **12.06.2019**
(21) Application number: 15720394.4
(22) Date of filing: 07.04.2015
(51) Int. Cl.: A23G 1/00, A23G 1/32, A23G 1/40

(54) **CONFECTIONERY PRODUCTION**
SÜSSWARENPRODUKTION
PRODUCTION DE CONFISERIE

(30) Priority: 08.04.2014 GB 201406261
(43) Date of publication of application: 15.02.2017
(73) Proprietor: Mars, Incorporated, McLean, VA 22101 (US)
(72) Inventor: KRIEL, Tania, Slough Berkshire SL1 4LG (GB); HOLT, Anais, Slough Berkshire SL1 4LG (GB); CATTARUZZA, Andrea, Slough Berkshire SL1 4LG (GB); MARANGONI, Alejandro, Guelph, Ontario N1H 6J3 (CA); STORTZ, Terri, Guelph, Ontario N1H 6J3 (CA)
(74) Representative: Greaves Brewster LLP
(86) International application number: PCT/GB2015/051062
(87) International publication number: WO 2015/155519

(56) References cited:
- EP-A1- 0 637 420
- EP-A1- 2 186 420
- WO-A1-2011/010105
- WO-A1-2014/052312
- GB-A- 1 219 996
- US-A- 2 904 438
- US-A1- 2010 323 067
- TERRI A STORTZ ET AL: "Heat resistant chocolate", TRENDS IN FOOD SCIENCE AND TECHNOLOGY, vol. 22, no. 5, 11 February 2011 (2011-02-11), pages 201-214, XP028208861, ISSN: 0924-2244, DOI: 10.1016/J.TIFS.2011.02.001 [retrieved on 2011-02-11]

## Description

The present invention is defined by the claims and relates to a method for preparing a heat tolerant chocolate.

Developing confectionery compositions which are tolerant to temperature is an ongoing problem. A basic ingredient in the production of many confectionery items are fats such as cocoa butter or vegetable fats, which contribute to the desirable melting characteristics of the product. This is because these fats soften and begin to melt in the mouth. However, such melting properties can present problems for storage and distribution of the products, in particular if they are to be shipped to areas of relatively high ambient temperature. Under these circumstances, the products may lose hardness leading to a reduction in the texture quality.

Various lines of research have been followed in trying to address this problem.

WO2011/010105 addresses this problem by mixing small amounts of liquid, comprising water as a first component and a non-aqueous liquid as a second component, into a molten confectionery composition comprising a bulk sweetener and fat, and allowing this liquid containing confectionery mixture to set. The resultant product has higher heat tolerance. It is suggested that this may be the result of partial dissolution and recrystallisation of the bulk sweetener in the water, the heat tolerance of the resultant chocolate is enhanced as a result of the recrystallisation of the sweetener in the form of a stable three dimensional lattice on removal of the liquid. The application suggests that at least some of the liquid may be removed from the confectionery by a process of 'stoving'.

It is generally taught that the liquid should principally be water and that it should be added in an amount of less than 5wt% of the liquid containing confectionery mixture. However, in some examples, higher concentrations of ethanol/water mixtures are used in contrast to the general teaching of the application.

Mixtures of ethylcellulose (EC) solubilized in ethanol for use in a 'structuring' technique for the production of heat resistant chocolate is also described by Stortz et al. Food Research International 51 (2013), 797-803. In this case, the ethylcellulose forms a gel with the fat phase of the chocolate. The chocolate used in this work was generally commercially available chocolate and the applicants have determined that the particle size of the sweetener present in that chocolate was about 24µm. The ethanol is used as a solvent for the ethylcellulose and is subsequently evaporated off from the chocolate. Whilst it was noted in that paper that some 'control' chocolate made using ethanol alone showed some heat resistance, this was attributed to the inadvertent presence of adsorbed water in the ethanol suggesting that the ethanol used was in fact a mixture of ethanol and water. The teaching of this reference is that EC is required for heat resistance or water.

The applicants have found however that substantially pure, non-aqueous solvents may be advantageously used in the preparation of heat resistant confectionery and in particular, heat resistant chocolate.

According to the present invention, there is provided a method for preparing a heat tolerant chocolate according to claim 1. According to the invention, the non-aqueous solvent is ethanol. Contrary to the teaching of the art, the amount of water present in the non-aqueous solvent may be less than 4%w/w. According to the invention, the amount of water present in ethanol is less than 1.5% w/w. Additionally, enhanced heat resistance may be achieved by ensuring that the average particle size of the sweetener is sufficiently small, in particular less than 50µm, for example less than 30µm or 24µm, such as less than 20µm for example from 12-15µm.

As used herein, the term 'non-aqueous solvent' refers to solvents in particular organic solvents. These may contain some water, but in particular contain less than 4%w/w water, for example less than 3%w/w water, for example less than 2%w/w water, in particular less than 1.5%w/w water, such as less than 1.2%w/w water, for instance less than 1%w/w water, such as less than 0.5%w/w water, and in particular less than 0.05%w/w water. In a particular embodiment, the non-aqueous solvent is substantially free of water. According to the invention, the non-aqueous solvent is ethanol containing less than 1.5% w/w water.

Where the average sweetener size is small, for example less than 50µm, such as less than 30µm or less than 24µm, and in particular less than 20µm, the non-aqueous solvent may contain more than 4%w/w water, for example up to 8%w/w. However, in a particular embodiment, both the particle size of the sweetener is small as described above, and the amount of water present in the non-aqueous solvent is less than 4%w/w. These embodiments do not form part of the invention.

The use of non-aqueous solvents is advantageous in that they produce confectionery with good heat stability. Furthermore, depending upon the boiling point of the particular solvent being used, they may evaporate more readily from the product than water and thus the need for high energy processes such as 'stoving' may be reduced or eliminated. Furthermore, the omission of significant quantities of water means that the product does not contain unwarranted amounts of residual water, which may affect the properties such as the viscosity of the final product.

The applicants have found that there is no need to include ethylcellulose in order to achieve heat robust confectionery and thus, compositions produced in accordance with the invention may be free of ethylcellulose. However, if ethylcellulose is soluble in the non-aqueous solvent employed, then it may be added, for example at an amount of from 20-25% that of the solvent to further improve hardness.

According to the invention the solvent is ethanol. Other suitable solvents will depend upon factors such as the particular nature of the confectionery being prepared and in particular the sweeteners used. Suitable solvents may be determined by determining the solubility of the sweetener being used in the solvent using conventional methodology. In particular, solubility measurements may be taken by making saturated solutions of the sweetener in the solvent, evaporating the solvent and weighing the residual material. In particular, the solvent is considered to be one in which the sweetener is partially soluble' as required in accordance with the invention if the solubility of the sweetener when measured using this method is from 0.1-10mg/ml, and in particular from 0.5-8mg/ml, such as from 0.5-4mg/ml. However, embodiments in which the solvent is not ethanol do not form part of the invention.

Without being bound by theory, it seems that in accordance with the method of the invention, the solvent partially dissolves the sweetener to make it sticky whereupon it then forms a more stable matrix within the product.

Suitably also, the solvent is one in which lecithin or phosphatidyl choline (PC) is soluble. These components appear to collect on the surface of the sweetener particles and inhibit formation of stable matrices. Therefore their dissolution and thus displacement from the surface of the sweetener facilitates the production of heat robust confectionery.

In an embodiment, the chocolate is compound chocolate (made with fat other than cocoa butter), which may be light (white) or dark (milk or plain) chocolate, as well as other types of confectionery product such as fat-based confections, for instance nougat, fudge, toffee, or other confectionery products like caramels including aerated caramels and confectionery creams, which contain some fat.

Chocolate may be crumb chocolate (as described for example in WO2007/125291) or 'dry mix' chocolate, which may also be known as 'non-crumb' chocolate.

Specifically, crumb chocolate is made from the mixture of sugar, milk (or dried milk and water), cocoa mass and optional additives such as whey powder or lactose, known in the confectionery industry as 'crumb'. This is a well-known intermediate in chocolate production. During the production process, the crumb is heated so as to develop certain recognised flavour characteristics. A fat, such as cocoa butter, is mixed with the chocolate crumb produced in order to produce the final crumb chocolate product.

Crumb chocolate obtained from this intermediate has recognised flavour characteristics which are distinct from 'non-crumb' or dry mix chocolates which do not utilise the crumb intermediate in their production.

Sweeteners will generally comprise a material which comprises a glucose moiety with free OH groups, in particular those which have crystalline forms. In particular, the sweetener comprises a sugar such as sucrose, glucose, maltose, dextrose or lactose or a sugar substitute.

In a particular embodiment, the sweetener is sucrose.

In a particular embodiment, the sweetener has a relatively small particle sizes. Whilst the sweetener may contain particles ranging from 1-100µm in size, overall, the average particle size is suitably less than 100pm, for example of from 4-50µm and in particular from 4-30µm, such as 4-20µm or 12-15µm. In this context, particle size may be measured using a micrometer.

Alternatively, particle size is measured using light diffraction and in particular, a laser scattering particle size analyser. These devices provide results in the form of a distribution of particle sizes, allowing the parameters of the distribution curve, to arrive at the average particle sizes. Typically a D82 value (where 82% of the particles are smaller than the mentioned particle size) is assessed. Thus a D82 value of 18 microns means that 82% of the particles present are below 18 microns.

As used herein, when referring to 'particle sizes', it is to be understood that it refers to the median particle size. For instance, where particles are spherical or generally spherical, the particle sizes refer to the diameters of the particles. However, if the particles are non-spherical in shape, the particle size is expressed as a 'spherical equivalent', where the size is expressed as if they were spherical in shape. Typically the particles are spherical and the particle size refers to the diameter of the particles. According to the invention, the non-aqueous solvent is ethanol.

Other suitable non-aqueous solvent, which however do not form part of the invention, include hydrocarbon solvents such as alkanes, alkenes, alkynes, alcohols, such as alkyl or aryl alcohols, ethers such as di-alkylethers, ketones such as alkyl or aryl ketones, and wherein any carbon atoms in the hydrocarbon solvent may be optionally substituted by functional groups.

As used herein, the term 'alkyl' includes moieties having saturated straight or branched chains and/or cyclic chains of carbon atoms, suitably having from 1-20 carbon atoms for example from 1-10 carbon atoms. Similarly the expression 'alkenes' and 'alkynes' refer to similar arrangements of carbon atoms, but which include at least one unsaturated bond. Thus alkenes and alkynes will suitably contain from 2-20, for example from 2-10 carbon atoms. The term 'aryl' refers to aromatic rings such as phenyl rings.

As used herein the term 'functional group' includes reactive groups such as halogens for instance, chlorine or fluorine, acyl groups such as alkyl acyl groups or formyl groups, ester groups such as alkyl esters, hydroxy groups,

In particular, the non-aqueous solvent is an alcohol, and in particular C₁₋₆alkyl alcohols such as methanol, ethanol, butanol or iso-propanol, or a C₁₋₆alkyl acetate such as methyl acetate or ethyl acetate, a diC₁₋₆alkyl ketone such as acetone, an optionally substituted C₁₋₆alkane such as hexane or dichloromethane, or an C₁₋₁₀ alkene such as limonene.

Suitably the solvents are acceptable for use in foodstuffs, but if they are not, they may be evaporated from the product in a subsequent step. In such cases, the boiling point of the solvent is suitably below 100°C, for example below 90°C such as below 80°C.

The only solvent according to the invention is ethanol.

According to the invention, the solvent is ethanol containing less than 1.5% w/w water and the confectionery product is chocolate, the amount of ethanol added to the liquid confectionery composition is less than 5wt%.

The method of the invention requires that the ethanol is combined with a chocolate composition. This is suitably achieved by processes such as shearing or mixing. Depending upon the nature of the chocolate composition, it may be possible to carry this process out at ambient temperature. However, for products which are solid or substantially solid at room temperature, it may be necessary to first liquefy the composition, for example by heating to a temperature at which at least some of the fats present in the composition have melted. After combination with the ethanol, the resultant mixture may be allowed to solidify.

In a particular embodiment, the chocolate may be first heated and then cooled, for example using a tempering procedure before the non-aqueous solvent is added.

The temperatures required to achieve any liquefaction required will vary depending upon the particular chocolate and in particular the fat content of the product. Typically however, heating or otherwise allowing the chocolate to reach a temperature in the range of from 25-70°C, such as from 25-45°C, should be sufficient. The melted chocolate is suitably cooled, for instance to temperatures in the range of from 25-35°C such as about 29°C before addition of the non-aqueous solvent.

According to the invention, ethanol is added in an amount of 5% w/w or less. Once the ethanol has been added, mixing or shearing is carried out for a period of time sufficient to ensure that the ethanol becomes fully integrated into the product. The length of time necessary for achieving this will vary depending upon factors such as the size of the sample of chocolate batch being treated, and whether or not the process is part of a continuous manufacturing process or not as well as the nature of any mixing technology utilised. It is necessary to ensure that the temperature of the confectionery composition remains at a level at which efficient mixing is possible throughout the process. Typically, mixing this will be for a period of from 1 to 10 minutes. Mixing may be carried out in a conventional mixing machine or manually.

Thereafter, if necessary, the product is allowed to solidify or set, for example in a mould, with cooling if necessary.

After combination and, where required, solidification or setting, the product may be subject to an incubation step to allow some or all of the remaining non-aqueous solvent to evaporate. The temperatures and times used during the incubation step will vary depending upon the particular nature of the confectionery product, but for chocolate products, will typically be in the range of from 25-40°C for example about 30°C, for a period of several days, for example from 5-20 days such as about 9 days.

Typically, the incubation step will be continued until any weight loss of the product has reached a plateau, where no additional significant loss occurs.

Products treated using the method described above show improved heat robustness as demonstrated by hardness tests carried out after product storage as described below.

In a particular embodiment, the average particle size of sweetener is less than 100pm, for example from 4 - 50µm and in particular is from 4-20µm or 12-15µm, such as about 14µm.

The invention will now be particularly described by way of example with reference to the accompanying diagrammatic drawings in which:
Figure 1 shows the results of experiments to determine the heat stability of chocolate containing non-aqueous solvents at 3.9wt% as measured by texture analysis. Error bars indicate standard deviation;
Figure 2 shows the results of experiments to determine the heat stability of various chocolate types (crumb and dry-mix (DM)) which had been mixed with various concentrations of ethanol or different particle sizes of sugars, as measured by texture analysis. Error bars indicate standard deviation;
Figure 3 shows the results of experiments investigating the heat stability of chocolate with various concentrations of non-aqueous solvent in the chocolate, where 3(A) shows the results after 2 weeks in crumb chocolate and 3(B) shows the results after 2 weeks in dry mix chocolate and where the figures listed correlate with the %w/w ethanol added to the chocolate;
Figure 4 shows the results of experiments investigating the effects of particle size of the sweetener on the heat stability of chocolate at 4 weeks incorporating non-aqueous solvent, where crumb chocolate is used for particles of 22µm and under and a compound chocolate is used for particle size of 24µm; and
Figure 5 shows the results of experiments investigating the effects of water content of 3.9% w/w of the non-aqueous solvent on the heat stability of a crumb chocolate.

### Example 1

Tempered chocolate (485g) was placed in a mixer at a temperature of 29°C and absolute ethanol (EtOH)(19.5g) or isopropyl alcohol (IPA) (19.5g) was added. The composition was stirred manually for 1 minute and then the chocolate was placed in a mould. The mould was cooled for 45 minutes at 4°C at the product was then removed from the mould. After weighing, the chocolate was incubated at 30°C for 9 days to allow some ethanol to evaporate, before storage at 20°C.

After two and four weeks in storage, the hardness of the chocolate as well as that of untreated (STD) chocolate stored under similar conditions was tested by texture analysis. A Stable Microsystems texture analyser (HD-Plus) inside a 40°C oven was used to deform the middle of 6 segments of a 33 g chocolate bar consisting of 10 segments in two rows. The chocolate bars were incubated at 40°C for two hours before being penetrated by a 12.7 mm cylindrical probe. The probe was lowered vertically at a rate of 10 mm/s to a depth of 3 mm and the maximum force (in Newtons) recorded.

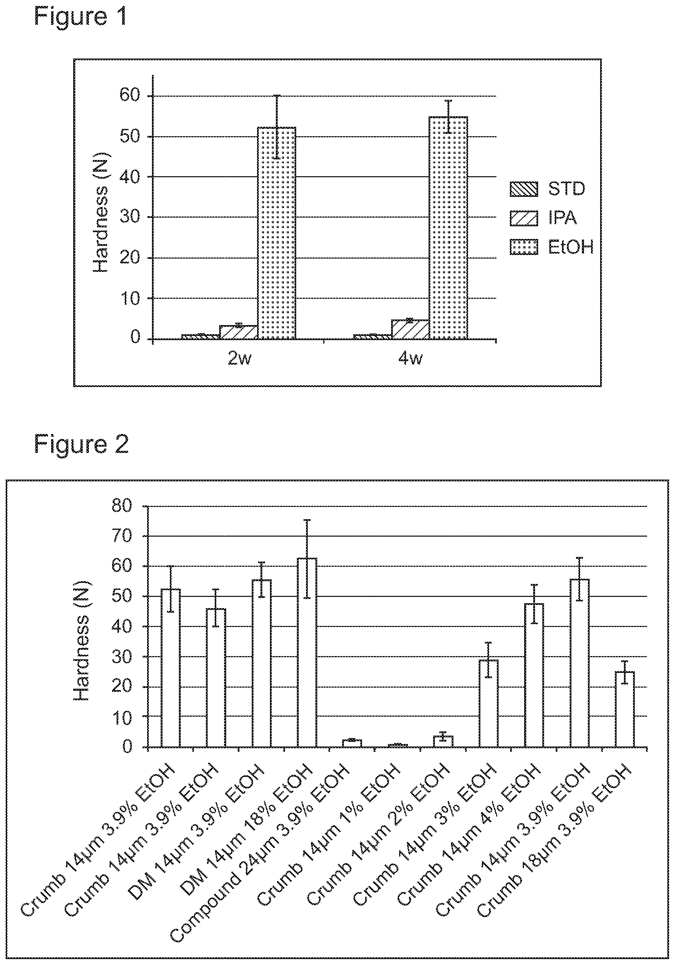

The results are shown in Figure 1

While the hardness of both treated chocolates was improved compared to the untreated control, the results obtained with ethanol were significantly improved. In this instance, the hardness equates directly with heat stability of the chocolate.

The water content of the ethanol used in the process was also tested and found to be less than 1.1w/w total solvent.

### Example 2

The methodology of Example 1 was repeated with different types of chocolate (crumb and dry-mix) and with differing amounts of ethanol added. Unless stated otherwise, the average size of the sucrose particles used in the chocolate manufacture was 14µm. The average particle size in the compound chocolate tested was 24 µm. In one experiment, the size of the sucrose used in the chocolate manufacture was 18µm.

The results after 2 weeks are shown in Figure 2. These show that ethanol provides good heat stability to both crumb and dry mix chocolates. It appears, certainly in dry mix chocolate that increasing ethanol concentration above 4wt% has no added benefit. However, in crumb chocolate heat stability was increased by increasing the ethanol concentration from 1 to 4wt%, indicating that this may be a particularly beneficial concentration.

The results also show that sweetener particle size plays a role in heat stability. The improvement in the heat stability in the compound chocolate containing a higher average particle size was low. Furthermore, by increasing average particle size from 14 to 18µm, heat stability was reduced by about half.

### Example 3

### Effect of further water reduction

The method of Example 1 was repeated using absolute ethanol which had been subjected to a specific drying procedure so that the ethanol was substantially free of water. In particular, sodium sulphate was added to ethanol in a sufficient amount to form a free flowing suspension without clumps. The mixture was left for one day, after which, the ethanol was decanted off.

The hardness of the chocolate was tested after 3 days. The results are shown in Table 1 below, alongside those obtained in Example 1 after 2 weeks. The dried ethanol produced firmness values very similar to that of the product of Example 1 after 2 weeks. Since chocolate tends to get harder and more heat stable with time, this suggests that reducing the water content of the non-aqueous solvent to a value that is as low as possible, will be beneficial.

**Table 1**

| Sample type Time | Standard 2 weeks | IPA | EtOH | Dried EtOH 3 days |
|---|---|---|---|---|
| Average (6 segments | 1 | 3 | 52 | 43 |
| Standard deviation | 0 | 0 | 8 | 14 |
| Relative Standard Deviation | 9 | 14 | 15 | 32 |

### Example 4

### Evaluation of the addition of different ethanol concentrations to various chocolate compositions

Absolute ethanol (Fisher Scientific) was added to either crumb or dry mix chocolate formulations in amounts varying from 1 - 8wt%. The chocolate was weighed out and allowed to cool down to 33°C before being tempered down to 29°C on a marble slab. Once tempered, the ethanol in various amounts, also as specified below, was added. The mixture was stirred by hand for around 1 minute until the solvent appeared to be incorporated into the mixture. It was then moulded into 33g bar conformance moulds. The chocolate was spread into the corners of the mould using a spatula and tapped against the bench to remove air bubbles. The moulds were placed in a fridge for 45 minutes before the bars were removed. Once the bars were de-moulded, they were stored open in an incubator at 30°C to evaporate the solvent. Four bars from each batch were weighed periodically until weight loss reached a plateau (9 days), after which they were removed and stored at 20°C for four weeks. After two weeks, the heat stability of the samples was measured as described in Example 1.

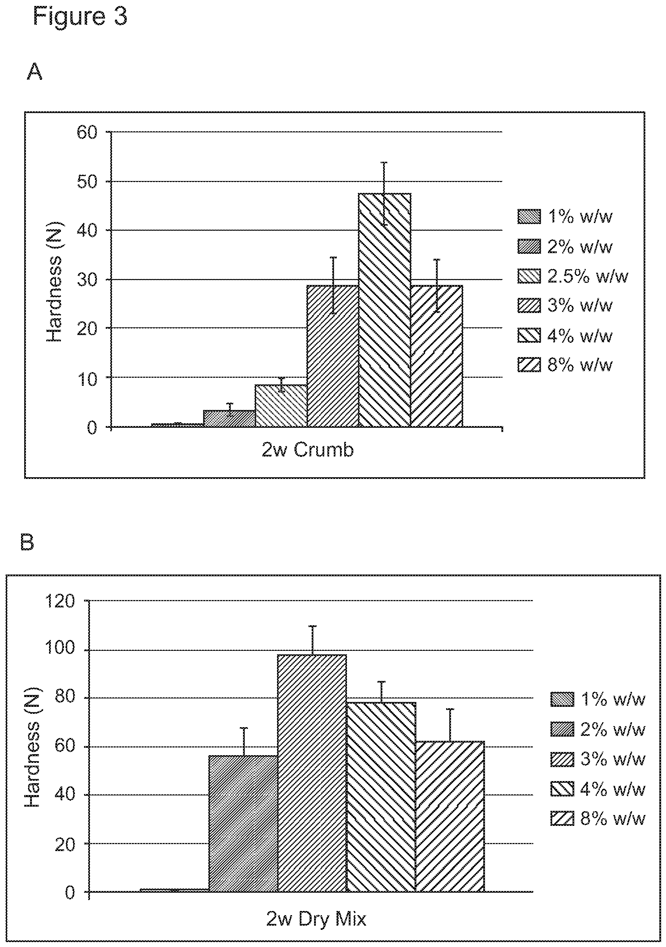

The results are shown in Figure 3 where Figure 3A shows the results for crumb chocolate and Figure 3B shows the results for dry mix chocolate. These results show that in the case of crumb chocolate, the heat stability increased with increasing ethanol concentration to a value of 4wt%, whereas in dry mix chocolate, a concentration of 3wt% ethanol appeared to be optimum for heat stability.

### Example 5

### Evaluation of particle size on the heat stability of various chocolate

The methodology of Example 4 was repeated using crumb chocolate prepared with a variety of particle sizes of sweetener ranging from 7pm to 22µM and with 3.9% ethanol added as described in Example 4. A sample of compound chocolate with a particle size of 24µM was also included in the test to increase the particle size range studied.

The decreased heat stability with particle smaller than 14 microns might be due to a full dissolution of the particles by the solvent inhibiting the formation of a solid matrix leading to heat stability.

### Example 6

### Effect of water content of non-aqueous solvent on heat stability

The methodology of Example 4 was repeated using crumb chocolate and 4% w/w ethanol, but in this case, the ethanol used contained varying amounts of water from 0% to 8%w/w.

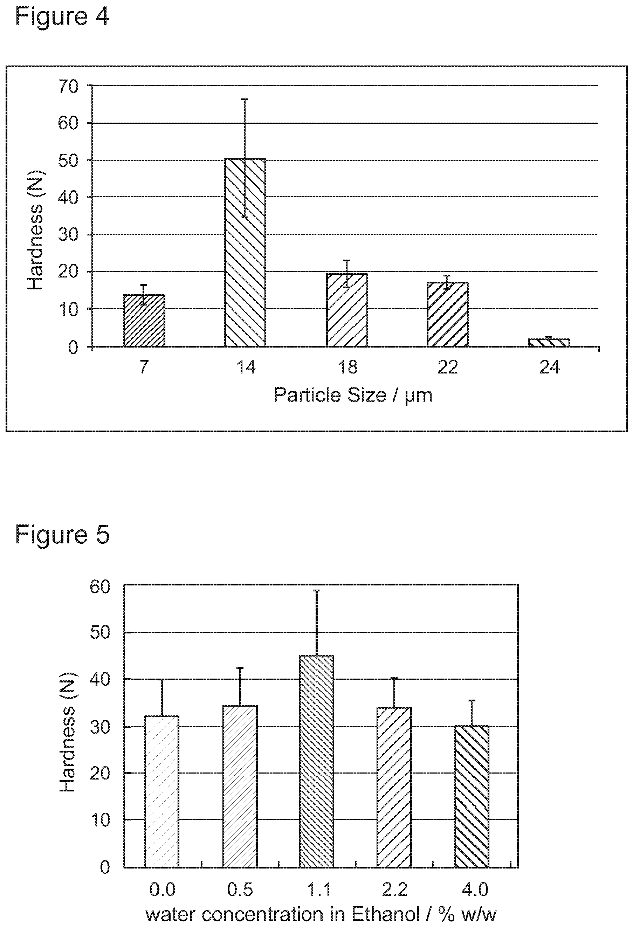

The results of hardness/heat stability tests after 2 weeks are shown in Figure 5. The results show that, in this experiment, the optimum water concentration was 1.1wt%.

## Claims

1. A method for preparing a heat tolerant chocolate comprising a fat and a sweetener, said method comprising combining together a chocolate composition comprising a fat and a sweetener with a non-aqueous solvent, wherein the non-aqueous solvent is one in which the sweetener is partially soluble, wherein the non-aqueous solvent contains less than 1.5 %w/w water, wherein the non-aqueous solvent is ethanol, and wherein the amount of ethanol added to the chocolate composition is less than 5wt%.

2. A method according to claim 1 wherein the chocolate is selected from crumb chocolate, "dry mix" (non-crumb) chocolate and compound chocolate.

3. A method according to claim 1 or claim 2 wherein the average particle size of the sweetener is less than 50µm.

4. A method according to claim 3 wherein the average particle size of the sweetener is from 4-20µm.

5. A method according to any one of the preceding claims wherein the chocolate composition is at a temperature in the range of from 25-70°C when the non-aqueous solvent is added.

6. A method according to claim 5 wherein the chocolate composition is first tempered and then allowed to cool before addition of the non-aqueous solvent.

7. A method according to claim 6 wherein the chocolate composition is at a temperature of about 29°C when the non-aqueous solvent is added.

8. A method according to claim 1 or claim 2 wherein the non-aqueous solvent is added in an amount of from 0.5-4wt% of the chocolate.

9. A method according to any one of the preceding claims wherein the chocolate composition is allowed to solidify after combination with the non-aqueous solvent.

10. A method according to any one of the preceding claims wherein the chocolate obtained is subjected to an incubation step to allow some or all of the remaining non-aqueous solvent to evaporate.

## Patentansprüche

1. Verfahren zum Herstellen einer ein Fett und ein Süßungsmittel umfassenden wärmeverträglichen Schokolade, wobei das Verfahren ein Kombinieren einer ein Fett und ein Süßungsmittel umfassenden Schokoladenzusammensetzung mit einem nichtwässrigen Lösemittel umfasst, wobei es sich bei dem nichtwässrigen Lösemittel um ein solches handelt, in welchem das Süßungsmittel teilweise löslich ist, wobei das nichtwässrige Lösemittel weniger als 1,5 Gew.-% Wasser enthält, wobei es sich bei dem nichtwässrigen Lösemittel um Ethanol handelt und wobei die der Schokoladenzusammensetzung zugegebene Menge an Ethanol weniger als 5 Gew.-% beträgt.

2. Verfahren nach Anspruch 1, wobei die Schokolade ausgewählt ist aus Schokolade in Krümelform, als "Trockenmischung" (nicht in Krümelform) vorliegender Schokolade und Fettglasurschokolade.

3. Verfahren nach Anspruch 1 oder Anspruch 2, wobei die mittlere Partikelgröße des Süßungsmittels weniger als 50 µm beträgt.

4. Verfahren nach Anspruch 3, wobei die mittlere Partikelgröße des Süßungsmittels 4 bis 20 µm beträgt.

5. Verfahren nach einem der vorhergehenden Ansprüche, wobei die Schokoladenzusammensetzung bei der Zugabe des nichtwässrigen Lösemittels eine Temperatur im Bereich von 25 bis 70 °C hat.

6. Verfahren nach Anspruch 5, wobei die Schokoladenzusammensetzung zunächst temperiert und dieser anschließend Gelegenheit zum Abkühlen gegeben wird, bevor das nichtwässrige Lösemittel zugegeben wird.

7. Verfahren nach Anspruch 6, wobei die Schokoladenzusammensetzung bei der Zugabe des nichtwässrigen Lösemittels eine Temperatur von etwa 29 °C hat.

8. Verfahren nach Anspruch 1 oder Anspruch 2, wobei das nichtwässrige Lösemittel in einer Menge von 0,5 bis 4 Gew.-% der Schokolade zugegeben wird.

9. Verfahren nach einem der vorhergehenden Ansprüche, wobei der Schokoladenzusammensetzung nach dem Kombinieren mit dem nichtwässrigen Lösemittel Gelegenheit gegeben wird, sich zu verfestigen.

10. Verfahren nach einem der vorhergehenden Ansprüche, wobei die erhaltene Schokolade einem Inkubationsschritt unterzogen wird, um dem restlichen nichtwässrigen Lösemittel Gelegenheit zu geben, teilweise oder ganz zu verdunsten.

## Revendications

1. Procédé destiné à la préparation d'un chocolat tolérant à la chaleur comprenant une matière grasse et un édulcorant, ledit procédé comprenant la combinaison ensemble d'une composition de chocolat comprenant une matière grasse et un édulcorant avec un solvant non aqueux, ledit solvant non aqueux étant un solvant dans lequel l'édulcorant est partiellement soluble, ledit solvant non aqueux contient moins de 1,5 % en poids d'eau, ledit solvant non aqueux étant de l'éthanol et ladite quantité d'éthanol ajoutée à la composition de chocolat étant inférieure à 5 % en poids.

2. Procédé selon la revendication 1, ledit chocolat étant choisi parmi un chocolat en miettes, un chocolat de « mélange sec » (sans miettes) et un chocolat composé.

3. Procédé selon la revendication 1 ou 2, ladite taille de particule moyenne de l'édulcorant étant inférieure à 50 µm.

4. Procédé selon la revendication 3, ladite taille de particule moyenne de l'édulcorant allant de 4 et 20 µm.

5. Procédé selon l'une quelconque des revendications précédentes, ladite composition de chocolat étant à une température comprise dans la plage allant de 25 à 70°C lorsque le solvant non aqueux est ajouté.

6. Procédé selon la revendication 5, ladite composition de chocolat étant d'abord trempée et ensuite laissée à refroidir avant l'ajout du solvant non aqueux.

7. Procédé selon la revendication 6, ladite composition de chocolat étant à une température d'environ 29°C lorsque le solvant non aqueux est ajouté.

8. Procédé selon la revendication 1 ou 2, ledit solvant non aqueux étant ajouté en une quantité allant de 0,5 à 4 % en poids du chocolat.

9. Procédé selon l'une quelconque des revendications précédentes, ladite composition de chocolat étant laissée à se solidifier après l'avoir combinée avec le solvant non aqueux.

10. Procédé selon l'une quelconque des revendications précédentes, ledit chocolat obtenu étant soumis à une étape d'incubation pour permettre à tout le solvant non aqueux restant ou à une partie de celui-ci de s'évaporer.
